**Europäisches Patentamt**

(19) **European Patent Office**

**Office européen des brevets**

(11) Numéro de publication: **0 024 078**
**B1**

(12) **FASCICULE DE BREVET EUROPEEN**

(45) Date de publication du fascicule du brevet:
**19.01.83**

(21) Numéro de dépôt: **80900380.9**

(22) Date de dépôt: **20.02.80**

(86) Numéro de dépôt international:
**PCT/FR 80/00025**

(87) Numéro de publication internationale:
**WO 80/01829 (04.09.80 Gazette 80/20)**

(51) Int. Cl.³: **F 16 F 7/12, B 60 R 19/06**

(54) **Procédé et dispositif absorbeur d'énergie cinétique pour mobiles.**

(30) Priorité: **23.02.79 FR 7905303**

(43) Date de publication de la demande:
**25.02.81 Bulletin 81/8**

(45) Mention de la délivrance du brevet:
**19.01.83 Bulletin 83/3**

(84) Etats contractants désignés:
**DE GB SE**

(56) Documents cités:
**DE-A-2 060 298**
**DE-A-2 222 885**
**FR-A-2 181 044**
**FR-A-2 198 565**
**FR-A-2 241 726**
**FR-A-2 394 422**
**GB-A-1 351 735**
**GB-A-1 503 316**
**US-A-3 721 320**
**US-A-3 865 418**
**US-A-3 915 486**

(73) Titulaire: **UGINE ACIERS, 10, rue du Général Foy,**
**F-75008 Paris (FR)**

(72) Inventeur: **FLUSIN, François, 175, rue de la Pompe,**
**F-75116 Paris (FR)**
Inventeur: **QUERAUD, Fernand, 79, rue de Paris,**
**F-92110 Clichy-la-Garenne (FR)**

(74) Mandataire: **Givord, Jean-Pierre et al, PECHINEY UGINE**
**KUHLMANN 28, rue de Bonnel, F-69433 Lyon**
**Cedex 3 (FR)**

Procédé et dispositif absorbeur d'énergie cinétique pour mobiles

Le dispositif suivant l'invention a pour objet l'absorption des quantités élevées d'énergie cinétique qui sont libérées par la décélération des mobiles, en particulier dans le cas de chocs violents. Ce dispositif peut être utilisé pour l'absorption des chocs violents subis par tous types de véhicules, et s'applique plus particulièrement aux véhicules transportant des passagers tels que les automobiles ou les wagons de chemin de fer.

Dans le brevet français FR-A-2 401 801, un dispositif pare-chocs à haute absorption pour véhicules est décrit. Dans ce dispositif, l'énergie d'impact développée au moment d'un choc est transmise à une enceinte réceptrice par un fluide peu compressible du type de ceux utilisés pour actionner les freins hydrauliques des véhicules automobiles. L'énergie d'impact transmise par ce fluide hydraulique est absorbée par la déformation plastique de la peroi de cette enceinte réceptrice. Différents modes de mise en oeuvre de l'invention sont décrits dans le brevet français FR-A-2 401 801.

Les figures ci-après permettront de mieux comprendre les caractéristiques du dispositif décrit et revendiqué dans le brevet français FR-A-2 401 801, et celles de celui qui fait l'objet de la présente demande.

La figure 1 est un schéma d'un dispositif absorbeur de chocs décrit dans le brevet français FR-A-2 401 801.

La figure 2 est un schéma d'un mode de mise en oeuvre du dispositif de la figure 1.

La figure 3 décrit un premier mode de réalisation du dispositif suivant la présente invention.

Les figures 4 et 5 décrivent un deuxième mode de réalisation du dispositif suivant la présente invention.

La figure 6 est une variante du mode de réalisation décrit dans les figures 4 et 5.

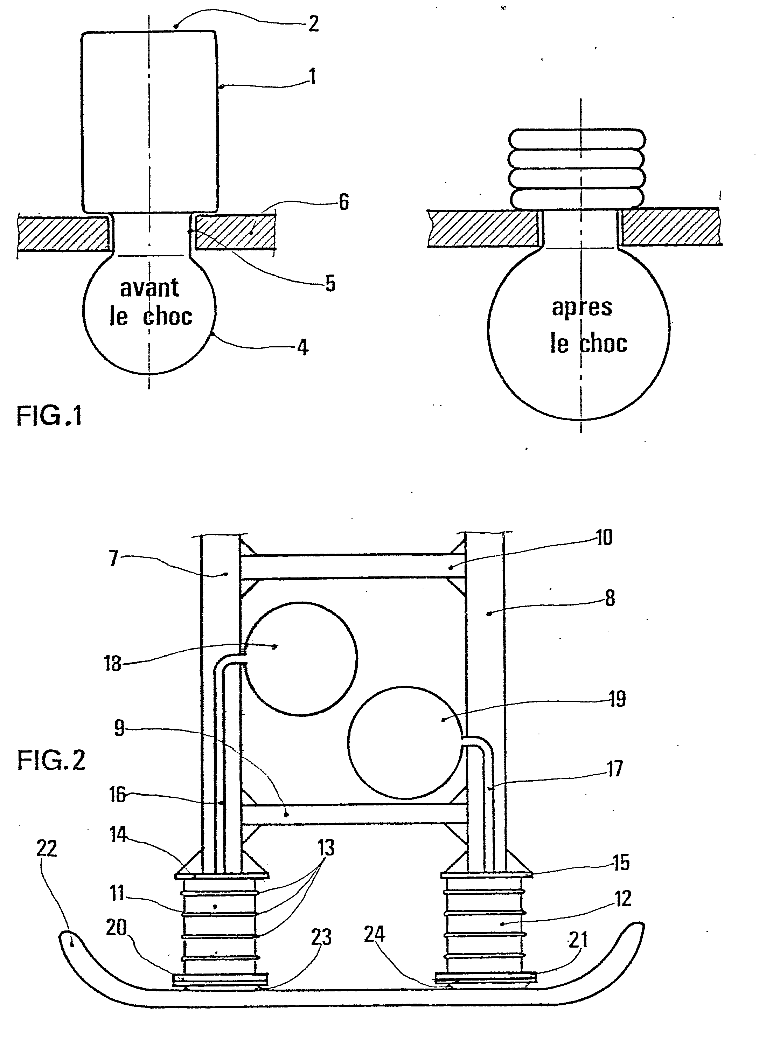

Le schéma de la figure 1, permet de comprendre comment est absorbée l'énergie cinétique par le fluide hydraulique. Dans ce schéma, une enceinte émettrice constituée par un cylindre (1) en acier est en communication avec une enceinte réceptrice de forme sensiblement sphérique (4) en un acier inoxydable du type dit à austénite instable.

L'ensemble, constitué par ces deux enceintes et le tube de liaison (5), est rempli d'un fluide hydraulique tel qu'une huile et est fixé à un support (6) disposé à l'avant d'un véhicule et solidaire du châssis de celui-ci.

En cas de choc frontal, s'exerçant sur la face (2) du cylindre (1), celui-ci est écrasé en accordéon. Le liquide qu'il contenait est au moins en partie refoulé dans l'enceinte réceptrice (4) dont le volume s'accroît par déformation plastique.

Comme cela est décrit de façon détaillée dans le brevet FR-A-2 401 801, les dimensions du cylindre (1) et de la sphère (4) sont calculées de façon que l'énergie de déformation de l'enceinte (4) soit sensiblement égale à l'énergie cinétique qu'il s'agit d'absorber.

L'énergie à absorber au cours de l'impact d'un véhicule sur un obstacle fixe est fonction de la masse de ce véhicule et de sa vitesse. La longueur du cylindre (1) et les autres dimensions du dispositif absorbeur peuvent être déterminées afin que la décélération du véhicule reste au-dessous de la limite acceptable par un organisme humain.

On utilise, de préférence, pour la réalisation de l'enceinte réceptrice (4) des aciers austénitiques à austénite instable tels que les aciers du type ZIOCN 17-08 (norme AFNOR) en raison de leur grande écrouissabilité et de leur aptitude à supporter des déformations très importantes à très grande vitesse.

La figure 2, reproduite également d'après le brevet FR-A-2 401 801, représente un mode de réalisation d'un dispositif pare-chocs monté sur un véhicule automobile d'une masse totale de 1000 kg.

Sur cette figure, on a représenté le mode de montage du dispositif parechocs à l'avant d'un véhicule dont ne sont représentées que les extrémités de deux longerons (7) et (8), de grande rigidité, solidarisés entre eux par des traverses (9) et (10), et aussi de façon non décrite avec la structure résistante du véhicule.

Dans le prolongement de ces deux longerons sont montées deux viroles cylindriques (11) et (12) à axe horizontal en acier Z10CN 17-08 de 160 mm de diamètre, 300 mm de long et 1,5 mm d'épaisseur. Des frettes annulaires (13) en fil d'aciers inoxydable Z10CN 18-09 de 3 mm de diamètre ceinturent chaque virole tous les 50 mm environ. Ces viroles sont soudées par leur extrémité arrière à deux disques en acier de même nuance (14) et (15) de 200 mm de diamètre et 3 mm d'épaisseur, eux-mêmes soudés à l'extrémité des longerons. Deux tubes (16) et (17) à haute résistance à la pression, reaccordés chacun par une extrémité à l'un des diques (14) et (15) et par l'autre à l'une des sphères (18) et (19) mettent en relation le volume intérieur de chaque cylindre avec celui d'une sphère.

Chaque sphère, également en acier Z10CN 17-08 mesure 120 mm de rayon et 1 mm d'épaisseur.

Les viroles (11) et (12) sont fermées à l'avant par les disques (20) et (21) soudés, leurs dimensions sont les mêmes que celles des disques (14) et (15).

Une structure de pare-chocs classique constituée d'un profilé en acier (22) est fixée au moyen d'attaches (23) et (24) aux disques (20) et (21). Chaque ensemble constitué par un cylindre, une sphère et le tube qui les joint, est rempli par un fluide hydraulique ayant de préférence une faible viscosité, stable à la chaleur, et peu compressible.

Les essais ont montré qu'un tel dispositif était capable d'absorber l'énergie cinétique libérée par le choc frontal d'un véhicule de 1000 kg lancé à 40 km/h contre un mur fixe. Au cours d'un tel choc, la pression dans le système hydraulique passe par un maximum d'environ 100 bars, l'énergie absorbée par la déformation plastique de chaque sphère est d'environ 30 800 Joules, soit 61 600 Joules pour l'ensemble des deux sphères. Enfin, la décélération est d'environ 30 g.

De nombreux autres modes de mise en oeuvre du dispositif dans le brevet FR-A-2 401 801 sont susceptibles d'être réalisés et peuvent trouver un nombre considérable d'applications dans tous les domaines où on se propose d'absorber dans des temps courts des quantités élevées d'énergie cinétique, tout en limitant la décélération à des valeurs acceptables en particulier par un organisme humain.

Dans le but d'accroître encore le champ d'application du procédé qui vient d'être décrit, on a recherché la possibilité d'absorber l'énergie cinétique par déformation plastique d'une paroi métallique, sans faire appel à un fluide hydraulique transmetteur d'énergie.

Dans cette voie, on connaît déjà le FR-A-2 181 044 qui a décrit et revendiqué un dispositif d'amortissement de choc comportant un premier élément allongé, creux sur presque toute sa longueur, qui présente au moins une partie contourée longitudinalement différente en section transversale de la partie longitudinale restante dudit élément et un second élément allongé qui a au moins une partie contourée longitudinalement différente, en section transversale, de la partie restante dudit second élément allongé, et qui est relié télescopiquement au dit premier élément allongé par sa partie contourée longitudinalement reçue en contact surface contre surface dans ladite partie contourée longitudinalement dudit premier élément allongé, au moins l'un desdits premier et second éléments allongés étant formé en un matériau malléable pour être déformé en section transversale sur toute sa longueur lorsque ledit élément est forcé à se déplacer longitudinalement par rapport à l'autre élément allongé en réponse à un choc appliqué audit dispositif avec une force supérieure à la limite élastique dudit matériau malléable. ,

Ce dispositif peut être utilisé, en particulier, d'après les indications données dans ce FR-A-2 181 044 pour amortir les chocs subis par les véhicules automobiles. Bien que de nombreux modes de réalisation de ce dispositif soient décrits, il n'est donné aucune indication précise sur les caractéristiques des matériaux qu'il convient d'utiliser pour le réaliser. Il est seulement indiqué page 21, lignes 18 – 19 qu'on peut employer un matériau malléable tel que de l'aluminium, du cuivre ou du fer, ou une matière plastique ductile.

En fait, des essais effectués en vue d'absorber l'énergie cinétique d'un mobile par déformation plastique, ont montré que les matériaux courants, tels que ceux proposés dans le FR-A-2 181 044, n'ont que de faibles capacités d'absorption de l'énergie cinétique car ils n'ont pas une aptitude suffisante à supporter des déformations très importantes à très grande vitesse, et ils ne présentent pas non plus une résistance suffisante à la déformation. Ces matériaux ne permettent donc pas de réaliser facilement des dispositifs du type décrit dans le brevet présentant des dimensions compatibles avec l'application envisagée et permettant d'absorber des chocs violents, libérant des quantités importantes d'énergie cinétique.

Suivant la présente invention, on a eu l'idée de réaliser un procédé et un dispositif absorber de l'énergie cinétique libérée par le choc d'un mobile contre un obstacle, fixe ou non, comportant une pièce réceptrice femelle et un pénétrateur, l'un de ces deux organes étant solidaire du mobile, et l'autre soumis de façon directe ou indirecte à l'action de l'obstacle qui s'oppose au déplacement du mobile, les dimensions du pénétrateur et de la pièce femelle étant telles, que la pièce femelle se déforme de façon plastique lorsque le pénétrateur s'y introduit sous l'effet du choc, cette pièce femelle étant en acier austénitique à austénite instable.

Dans bien des cas, ce sera le pénétrateur qui recevra de façon directe ou indirecte les chocs qu'on se propose d'absorber tandis que la pièce réceptrice sera liée au mobile; mais, la disposition inverse est tout aussi bien réalisable.

Les exemples schématiques non limitatifs ci-après permettent de mieux comprendre l'invention.

Exemple 1

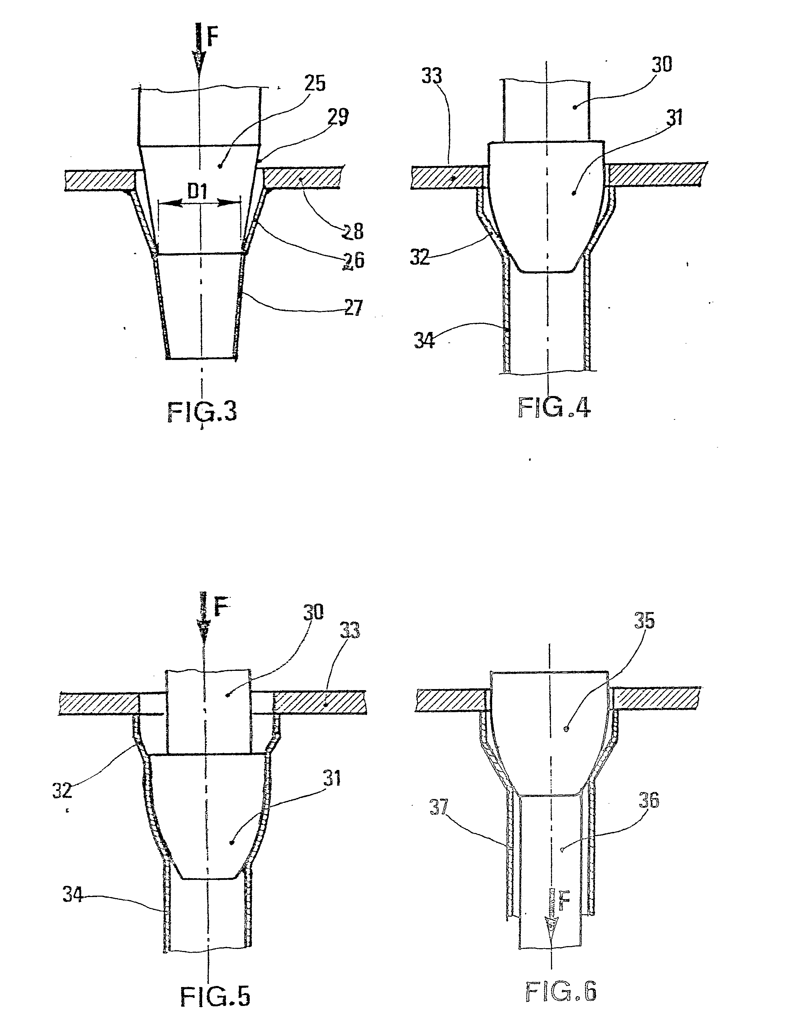

La figure 3 représente un dispositif suivant l'invention qui comporte un pénétrateur (25) et une pièce réceptrice femelle. Ces pièces sont de révolution autour d'un même axe. La pièce femelle comporte deux parties tronconiques (26) et (27). La parties (26) qui correspond à la zone d'entrée du pénétrateur a un angle au sommet plus ouvert que la partie (27) et est raccordée par sa grande base à un élément de structure (28) qui est lié de façon non décrite à l'ossature mobile, non décrite également, dont on se propose d'absorber l'énergie cinétique. La partie (27) est celle qui effectuera la plus grande partie du travail de déformation plastique, au fur et à mesure que le pénétrateur (25) se déplacera le long de l'axe dans le sens de la flèche F.

Le pénétrateur (25) comporte une zone tronconique (29) dont le petit diamètre D1 est sensiblement égal au diamètre intérieur de la pièce femelle au niveau du raccordement entre les parties (26) et (27). Le tronc de cône (29), dont la hauteur est égale à celle de la partie (27), a un angle au sommet de préférence supérieur à celui de la partie (27). Cet angle est avantageusement calculé pour que, à la pénétration complète du tronc de cône (29) dans la partie (27), c'est-à-dire pour une pénétration sensiblement égale à la hauteur commune des deux troncs de cône, toutes les sections de la partie (27) subissent le même allongement plastique. En effet, ce pénétrateur est orienté de façon telle par rapport au déplacement du mobile, que les chocs susceptibles de se produire soient reçus de façon directe ou indirecte par l'extrémité non représentée du pénétrateur et entraînent un déplacement relatif du pénétrateur par rapport à la pièce femelle suivant l'axe du dispositif. Des moyens de guidage non représentés peuvent du reste être utilisés pour parvenir à ce résultat. On comprend aisément que, au fur et à mesure de l'enfoncement du pénétrateur à l'intérieur de la partie (27) de la pièce femelle, il se produit une déformation plastique de cette partie dont le taux dépend de l'angle au sommet des troncs de cône (27) et (29), et de la longueur u parcours du pénétrateur mesurée parallèlement à l'axe. On détermine de préférence les hauteurs des troncs de cône (27) et (29) et leurs angles au sommet, de manière à obtenir, en fin de course, un taux de déformation plastique de la pièce femelle aussi grand que possible sans atteindre la rupture de celle-ci. En effet, la quantité d'énergie cinétique susceptible d'être absorbée par la pièce femelle est d'autant plus grande que celle-ci est capable de subir des déformations plastiques très importantes tout en présentant une résistance à la déformation aussi grande que possible. De nombreux métaux et alliages peuvent être utilisés dans ce but. Mais, ainsi que cela a déjà été montré dans le brevet FR-A-2 401 801 les aciers austénitiques à austénite instable tels que l'acier Z10CN 17-08 conviennent particulièrement pour une telle utilisation car, au fur et à mesure de leur déformation plastique, la formation de martensite d'écrouissage accroît très largement leurs caractéristiques mécaniques.

Dans la pratique, quand on utilise de telles nuances d'acier, on peut prévoir des taux de déformation plastique de l'ordre de 30 à 40% ou même davantage. Le pénétrateur est, de préférence, réalisé en un métal ou alliage de dureté suffisante pour ne pas subir de déformation notable au cours de son introduction à l'intérieur de la pièce femelle. Le diamètre d'entrée de la partie (27) et l'angle au sommet de ce tronc de cône permettent de définir la course qui devra être effectuée par le pénétrateur à l'intérieur de la pièce femelle pour obtenir le taux de déformation plastique envisagé. C'est cette course qui définira les conditions de décélération du mobile en fonction de sa masse et de sa vitesse par rapport à l'obstacle supposé fixe qui entre en contact avec le pénétrateur. Ces différentes caractéristiques doivent donc être déterminées de façon bien connue de l'homme de l'art en fonction de la masse du mobile et des vitesses d'impact vis-à-vis desquelles on se propose de protéger les passagers du véhicule. Les essais ont montré que l'énergie cinétique absorbée par un tel dispositif est nettement plus grande que celle qui correspond à la seule déformation plastique. En effet, une part relativement importante de l'énergie cinétique est absorbée aussi par les frottements entre pénétrateur et pièce femelle. Il est possible de limiter ces frottements par une lubrification convenable ou par des traitements de surface appropriés.

Des essais ont été effectués au moyen d'un dispositif comparable à celui de la figure 3, dans lequel la partie (27) de la pièce femelle était un tronc de cône creux de 100 mm de haut dont le grand diamètre D1 etait de 70 mm et le petit diamètre intérieur de 50 mm. Ce tronc de cône était réalisé en un acier à austénite instable de type Z10CN 17-08 (norme AFNOR). Son épaisseur de paroi était de 1 mm. Il était raccordé à une partie (26) plus évasée réalisée dans le même aciers, elle-même fixée à une plaque rigide et fixe de forte épaisseur telle que (28). Un poinçon, dont la partie tronconique (29) avait un petit diamètre D1 de 70 mm et un grand diamètre de 98 mm pour une hauteur de 100 mm, a été introduit à force dans la pièce femelle au moyen d'une presse jusqu'à pénétration complète de la partie (29) à l'intérieur de la partie (27) et on a mesuré le travail effectué. On a constaté que ce travail était d'environ 10 000 Joules. La partie (27) avait subi une déformation plastique d'environ 40%. Le calcul montre que l'énergie ainsi absorbée est sensiblement égale à celle acquise par une masse de 290 kg tombant d'une hauteur de 2,5 m. Un tel dispositif peut, sans difficulté, être extrapolé en vue d'absorber une énergie cinétique 10 fois plus grande. Or, une énergie cinétique de 100 000 Joules est, par exemple, celle accumulée par un mobile de 1 t, animé d'une vitesse de 50 km/h.

Il convient de remarquer qu'il n'est pas nécessaire de donner au pénétrateur et à la pièce femelle des formes de révolution; il n'est pas nécessaire, non plus, de leur donner la forme d'un tronc de cône. Il suffit, en fait, que le pénétrateur ait une forme et des dimensions telles que, en pénétrant dans la pièce femelle, il permette une déformation plastique de celle-ci suffisamment importante pour absorber l'énergie cinétique dont il est animé.

Les forme coniques telles que décrites dans l'exemple 1, ont pour inconvénient que, pour des grandes énergies de choc et des décélérations acceptables de l'ordre de 30 g par exemple, l'angle au sommet du cône mâle doit être très faible (environ 3°). Il en résulte que l'énergie absorbée en déformation devient relativement faible par rapport à l'énergie absorbée en frottements, qui est moins bien contrôlable que la première.

L'exemple 2 ci-après, décrit un autre dispositif suivant l'invention au moyen duquel l'absorption d'énergie est sensiblement proportionnelle à la course. L'énergie consommée en déformation est grande par rapport à celle consommée en frottements. Un mobile équipé d'un tel dispositif qui rencontrerait un obstacle fixe subirait une décélération sensiblement constante.

### Exemple 2

On voit sur les figures 4 et 5 un dispositif à absorption d'énergie proportionnelle à la course. Ce dispositif comporte un pénétrateur dont l'extrémité (31) a une forme conique ou, éventuellement, ogivale comme celle des olives utilisées pour le travail intérieur des tubes dans les opérations d'étirage ou de calibrage. La pièce femelle comporte une zone d'entrée (32) sensiblement conique qui est fixée de façon connue à un élément de structure (33) du mobile. Au-delà de la zone d'entrée (32), la pièce femelle est un tube cylindrique (34) dont les caractéristiques de diamètre et d'épaisseur sont déterminées en fonction des taux de déformation plastique voulus et de la quantité d'énergie à absorber par unité de déplacement du pénétrateur. La tige (30) du pénétrateur est disposée de façon telle, que son extrémité non représentée puisse recevoir de façon directe ou indirecte la poussée exercée par un obstacle rencontré par le mobile, et d'utiliser cette poussée pour évaser le tube (34) au moyen de la partie (31). Dans la figure 4, on voit le pénétrateur dans une position initiale, la partie (31) étant en contact avec les parois coniques de la zone d'entrée de la pièce femelle, tandis que, dans la figure 5, la partie (31) est engagée dans la pièce femelle qu'elle a déjà déformée plastiquement sur une certaine longueur sous l'action de la force de poussée F.

Dans le cas de ce dispositif, comme dans celui de l'exemple 1, il y a intérêt à réaliser la pièce femelle (34, 32) en acier inoxydable austénitique à austénite instable. Ceci permet d'absorber par déformation plastique un maximum d'énergie en mettant en oeuvre un minimum de matière.

L'utilisation d'une pièce femelle cylindrique a le grand intérêt de permettre la réalisation de courses aussi longues qu'on le désire. Il peut être intéressant, dans certains cas, d'agir sur le pénétrateur non pas en le poussant, mais en le tirant. La figure 6 montre un tel dispositif, dans lequel l'extrémité (35) du pénétrateur est tirée par une tige (36) à l'intérieur de la pièce femelle (37).

De très nombreux autre modes de réalisation du dispositif selon l'invention sont possibles.

Le dispositif selon l'invention convient en particulier pour l'absorption des chocs violents de mobiles de tous types contre des obstacles fixes ou non ou contre d'autres mobiles, à des vitesses pouvant atteindre 50 à 70 km/h et même davantage. Ce dispositif convient plus particulièrement pour l'absorption des chocs de forte énergie.

### Revendications

1. Dispositif absorbeur de l'énergie cinétique libérée par le choc d'un mobile contre un obstacle, fixe ou non, comportant une pièce réceptrice femelle (26, 27, 32, 34) et un pénétrateur (25), l'un de ces deux organes étant solidaire du mobile, et l'autre soumis de façon directe ou indirecte à l'action de l'obstacle qui s'oppose au déplacement du mobile, les dimensions du pénétrateur et de la pièce femelle étant telles, que la pièce femelle se déforme de façon plastique lorsque le pénétrateur s'y introduit sous l'effet du choc, caractérisé en ce que la pièce femelle est en acier austénitique à austénite instable.

2. Dispositif suivant revendication 1, caractérisé en ce que la pièce femelle comporte une partie tubulaire tronconique (26, 27).

3. Dispositif suivant revendication 1, caractérisé en ce que la pièce femelle comporte une partie tubulaire cylindrique (34).

4. Dispositif suivant l'une des revendications 1 à 3, caractérisé en ce que l'extrémité de la pièce femelle par laquelle s'introduit le pénétrateur est solidarisée avec un élément de structure (28,33).

5. Dispositif suivant l'une des revendications 1 à 4, caractérisé en ce que le pénétrateur (25) est tiré par une tige (36) qui traverse la pièce femelle.

6. Procédé pour absorber l'énergie cinétique libérée par le choc d'un mobile contre un obstacle, caractérisé en ce que l'on utilise au moins une partie de cette énergie pour déformer plastiquement une pièce femelle en acier austénitique à austénite instable au moyen d'un pénétrateur.

### Patentansprüche

1. Absorptionselement für kinetische Energie, die beim Stoß eines Fahrzeugs gegen ein starr oder nicht starr angeordnetes Hindernis freigegeben wird, bestehend aus einem Empfangsstück (26, 27; 32, 34) sowie einem Eindringstück (25), wobei eines dieser Stücke am Fahrzeug befestigt ist, während das andere direkt oder indirekt dem Einfluß des Hindernisses ausgesetzt ist, das sich der Bewegung des Fahrzeugs widersetzt und wobei die Abmessungen des Eindringstückes und des Empfangsstückes so gewählt sind, daß das Empfangsstück sich plastisch verformt, sobald das Eindringstück unter dem Einfluß des Stoßes hineingedrückt ist, dadurch gekennzeichnet, daß das Empfangsstück aus einem austenitischen Stahl besteht, dessen Austenit instabil ist.

2. Absorptionselement nach Anspruch 1, dadurch gekennzeichnet, daß das Empfangsstück einen rohrförmigen konischen Bereich (26, 27) aufweist.

3. Absorptionselement nach Anspruch 1, dadurch gekennzeichnet, daß das Empfangsstück einen rohrförmigen zylindrischen Bereich (34) aufweist.

4. Absorptionselement nach einem der Ansprüche 1 bis 3, dadurch gekennzeichnet, daß das äußerste Ende des Empfangsstückes, in welches das Eindringstück eingeführt wird, einstückig mit einem Strukturelement (28, 33) ausgebildet ist.

5. Absorptionselement nach einem der Ansprüche 1 bis 4, dadurch gekennzeichnet, daß das Eindringstück (25) an einer Stange (36) gezogen ist, welche das Empfangsstück durchquert.

6. Verfahren zum Absorbieren der kinetischen Energie, welche beim Stoß eines Fahrzeugs gegen ein Hindernis freigesetzt wird, dadurch gekennzeichnet, daß wenigstens ein Teil dieser Energie zur plastischen Deformation eines Empfangsstückes aus austenitischem Stahl mit einem instabilen Austenit unter Einsatz eines Eindringstückes verwendet wird.

## Claims

1. A device for absorbing the kinetic energy which is liberated by the impact of a movable body against an obstacle which may or may not be fixed, comprising a female receiving member (26, 27; 32, 34) and a penetrating member (25), one of said two components being fixed with respect to the movable body and the other being directly or indirectly subjected to the action of the obstacle which opposes movement of the movable body, the dimensions of the penetrating member and the female member geing such that the female member undergoes plastic deformation when the penetrating member is introduced thereinto under the effect to the impact, characterised in that the female member is of austenitic steel of unstable austenite type.

2. A device according to claim 1 characterised in that the female member comprises a frustoconical tubular portion (26, 27).

3. A device according to claim 1 characterised in that the female member comprises a cylindrical tubular portion (34).

4. A device according to one of claims 1 to 3 characterised in that the end of the female member at which the penetrating member is introduced is fixed to a structural element (28, 33).

5. A device according to one of claims 1 to 4 characterised in that the penetrating member (25) is pulled by a rod (36) which passes through the female member.

6. A process for absorbing the kinetic energy which is liberated by the impact of a movable body against an obstacle, characterised in that at least a part of said energy is used to cause plastic deformation of a female member comprising austenitic steel of unstable austenite type, by means of a penetrating member.

FIG.1

avant
le choc

apres
le choc

FIG.2

FIG.3

FIG.4

FIG.5

FIG.6